# EUROPEAN PATENT APPLICATION

(11) **EP 3 406 805 A1**
(43) Date of publication of application: **28.11.2018**
(21) Application number: 18171906.3
(22) Date of filing: 11.05.2018
(51) Int. Cl.: E02F 9/02, B62D 21/14

(54) **WORKING MACHINE**

(30) Priority: 19.05.2017 GB 201708088
(71) Applicant: J.C. Bamford Excavators Limited, Rocester Uttoxeter Staffordshire ST14 5JP (GB)
(72) Inventor: Ratcliffe, Simon, Uttoxeter, Staffordshire ST14 5JP (GB)
(74) Representative: Foot, Paul Matthew James

(57) **Abstract**

A working machine comprising a chassis; first and second elongate support members, each elongate support member being pivotally coupled to the chassis at a respective pivot point; a first wheel assembly coupled to the first elongate support member and a second wheel assembly coupled to the second elongate support member; a first linear actuator coupled to the first elongate support member and a second linear actuator coupled to the second elongate support member, wherein the elongate support members are movable by operation of the actuators between a stowed configuration and a deployed configuration. A distance between the first and second wheel assemblies is greater in the deployed configuration than in the stowed configuration. The first and second linear actuators are pivotally coupled to the chassis along a common pivot axis.

## Description

### FIELD OF THE INVENTION

The present disclosure relates to a working machine, for example a mobile elevated work platform, comprising elongate support members which are movable between a stowed configuration and a deployed configuration.

### BACKGROUND OF THE INVENTION

Working machines, such as mobile elevated work platforms, excavators or backhoe loaders, for example, include a transport means for moving a machine to a desired location. Such transport means may be a track system or series of wheel assemblies, for example. Such transport means are typically coupled to a body, which carries one or more tool assemblies of the working machine. For example, such tool assemblies may comprise extending or articulated booms, working arms and attachments connected thereto. For example, the working machine may be a materials handling vehicle such as a telescopic handler, an excavator, a backhoe loader, etc., with a shovel, bucket or forks, etc. connected thereto. Or the working machine may be an elevated work platform with the tool being the platform or basket in which one or more people may stand.

In such arrangements the body of the working machine acts as a support for the tool assemblies. Additional stabilising support can be provided by the working machine for example in the form of outriggers, or counter weights etc. Known vehicle support systems are disclosed in US7198278, US7425004, US7832741, US9174488 and US8888122. However known systems can be complex in their construction.

Accordingly working machines which overcome or substantially reduce problems associated with known working machines are provided herein.

### SUMMARY OF THE INVENTION

In a first aspect a working machine is provided, the working machine comprising:
a chassis;
first and second elongate support members, each elongate support member being pivotally coupled to the chassis at a respective pivot point;
a first wheel assembly coupled to the first elongate support member and a second wheel assembly coupled to the second elongate support member;
a first linear actuator coupled to the first elongate support member and a second linear actuator coupled to the second elongate support member, wherein the elongate support members are movable by operation of the actuators between a stowed configuration and a deployed configuration, wherein a distance between the first and second wheel assemblies is greater in the deployed configuration than in the stowed configuration,
and wherein the first and second linear actuators are pivotally coupled to the chassis along a common pivot axis.

In other words, the elongate support members of the working machine are arranged to adopt a stowed configuration in which the wheel assemblies are relatively close together, or a deployed configuration in which the wheel assemblies are spaced further apart than in the stowed configuration. In this way, should a user wish to transport the working machine, for example on a road, the elongate support members can be positioned in the stowed configuration in which the wheel assemblies are relatively close together, thereby enabling the working machine to be driven on a road or transported on a vehicle of standard width, for example.

On the other hand should a user require greater stability for the working machine transverse to the longitudinal axis, for example to support an extended elevated work platform, the first and second elongate members can be moved to their deployed position in which a greater track distance is provided. In such a deployed position, since the distance between the first and second wheel assemblies is relatively large, greater stability is provided to the working machine.

This is advantageous in the case where the working machine comprises a tool assembly, for example an elevated or articulated boom or an elevated work platform, since the deployed position will provide greater stability to the working machine when such booms or work platforms are extended away from the machine and rotated in relation to the chassis.

The first and second actuators are configured to move the first and second elongate support members from the stowed configuration to the deployed configuration. Advantageously the first and second actuators are pivotally coupled to the chassis at a common pivot axis.

Movement of the first and/or second elongate support members by action of the respective actuator will result in corresponding reaction forces being applied to the common pivot point. It will be understood that, for movement of each elongate support member, the corresponding reaction forces applied to the common pivot point will comprise a component in a direction opposite to the direction of movement of the respective elongate support member.

Since the first and second elongate members are moved away from each other from the stowed position to the deployed position, components of the reaction forces in the directions opposite to the direction of movement of the respective support member will cancel each other out, at least in part. This is particularly advantageous where the common pivot point is supported by a bracket coupled to the chassis, since reducing these reaction forces will reduce the shear forces on the bracket, hence reduce the likelihood of breakage of the bracket.

In addition, by having a common pivot axis, a simplified working machine arrangement is permitted.

For example, in comparison to US 9174488 and US 8888122, in which linear actuators are coupled to a chassis at separate pivot points, working machines disclosed herein have the advantage that only a single pivot axis is required to be provided by the chassis. This enables a more simple arrangement to be provided. Further, the arrangement disclosed herein has the advantage that reaction forces applied to the pivot point can be reduced, as described above, thereby reducing fatigue related wear of the working machine, e.g. at welded connections, and reducing the likelihood of failure at these joints.

In comparison with US 7198278, US7425004 and US7832741, for example, a more simple deployment arrangement for moving the first and second elongate members between the stowed and deployed positions is provided by the embodiments disclosed herein. In particular a mechanical link between first and second elongate support members is not required in order for the elongate support members to be moved to their deployed configuration or retracted to their stowed configuration.

The simplified arrangement disclosed herein is also advantageous in that it only requires a single pivot pin and single set of fixing parts therefor. If the first and second linear actuators were coupled to the chassis at separate pivot points, at least two pivot pins and two sets of fixing parts would be required. Accordingly, the cost of parts for the arrangement disclosed herein is reduced.

In addition, since the first and second linear actuators are coupled to the chassis at a single pivot axis, manufacturing time can be reduced. Only a single pivot connection is required to be machined, thereby saving time and cost (e.g. only a single pivot bracket needs to be machined).

In some known systems, additional stability is provided to a working machine by providing a counterweight to balance an elevated work platform. However, there is a limit to the weight of counterweight that can be used. For example, if too large a weight is used, it is not possible to transport the working machine using standard trucks or vehicles. In addition, the overall weight of the working machine will impact the type of terrain on which the machine can be used.

The arrangement disclosed herein is advantageous in that it provides additional stability to an elevated work platform, whilst not requiring a large increase in counterweight.

Optionally the common pivot axis is located at a position between the respective pivot points at which the first and second elongate support members are coupled to the chassis, for example at a position equidistant from the respective pivot points at which the first and second elongate support members are coupled to the chassis.

In this way an angle between at least one of the first and second linear actuators and the respective first and second elongate support members can be maximised, thereby facilitating actuation of the respective linear actuator.

In the case where the common pivot axis is equidistant from the respective pivot points at which the first and second elongate support members are coupled to the chassis, the angle between the first linear actuator and the first elongate support member will be substantially equal to that of the second linear actuator and the second elongate support member. In other words, both angles are maximised.

Maximising these angles has the advantage that the component of the force applied by the actuator in a direction perpendicular to a length of the elongate support member is maximised. Therefore the overall force exerted by the linear actuator can be reduced (i.e. the force in the direction along a length of the actuator can be reduced). In other words, where the linear actuator is a hydraulic ram, for example, the amount of extension of the ram is reduced where the angles are maximised.

In addition, the arrangement in which the common pivot axis is equidistant from the respective pivot points at which the first and second elongate support members are coupled to the chassis is the optimal geometry for cancelling out reaction forces applied to the common pivot point, as the elongate members are moved away from each other.

Optionally the working machine comprises a longitudinal axis and the common pivot axis intersects the longitudinal axis.

Positioning the first and second actuators such that they are coupled to the chassis at the longitudinal axis of the working machine is advantageous in providing a more balanced application of force to the first and second elongate members.

Optionally the first and second elongate support members comprise a length and the linear actuators are coupled to the respective elongate support member at a position falling within a centre third of the length.

By coupling the linear actuator to the respective elongate support member at a location which is spaced apart from the point at which the elongate support member is coupled to the chassis, a reduced force is required to move the elongate support member from the stowed to deployed configurations and vice versa. In other words the force which the actuator is required to provide in order to move the elongate support member from the stowed to the deployed configuration and vice versa is reduced compared to an arrangement where the actuator is coupled to the respective elongate member at a point closer to its pivot point.

In some embodiments, the first and second linear actuators are coupled to the respective elongate support member at a point the same distance along the length of the respective elongate support member.

In some embodiments, the first and second linear actuators are coupled to the respective elongate support member at a location substantially half way along the length of the respective elongate support member.

Optionally the first and second linear actuators are arranged for simultaneous movement, for example, simultaneous movement which is symmetric about a longitudinal axis of the working machine.

This facilitates uniform stabilisation of the working machine to support an extending arm or boom, for example.

Further, in the case of symmetric movement, reaction forces applied to the common pivot axis in the directions opposite to the direction of movement of the respective elongate support members are substantially equal, therefore cancelling each other out. This minimises the shear forces applied to the common pivot point and so reduces wear of the working machine and reduces the likelihood of damage.

Optionally the first and second linear actuators are configured to independently move the respective first and second elongate members.

Accordingly independent control of each elongate member is provided, thereby providing improved control of the working machine. In some embodiments, the first and second elongate support members are disconnected so that they can be operated separately and independently from each other.

Optionally the first and second linear actuators are connected to the chassis by a common pivot pin provided along the common pivot axis.

In this way a working machine of relatively simple construction can be provided.

In some embodiments, the chassis comprises an upper and/or lower surface comprising metal plate and the common pivot pin is mounted directly on the upper and/or lower surface of the chassis.

Optionally the elongate support members have a height in a direction substantially perpendicular to the ground when the working machine is in use, and wherein the elongate support members are pivotally coupled to the chassis by a respective pivot pin which extends along the height of the respective elongate support member.

By extending the pivot pin along the full height of the respective elongate member, shear forces applied to the pivot pin as the respective elongate support member rotates about the pin are spread across the pin. Distribution of load in this manner reduces the likelihood of damage to or breakage of the pivot pin.

Optionally the chassis comprises an upper surface and a lower surface, and wherein the height of the elongate support members extends from a location proximal the upper surface to a location proximal the lower surface.

Thereby maximising the height of the elongate support members.

Optionally the first and second linear actuators are provided in a stacked arrangement such that the first linear actuator is configured to move in a first plane and the second linear actuator is configured to move in a second plane different from the first plane, wherein, when in use, the first and second planes are provided one above the other.

In this way, the first and second linear actuators are free to move without interference with one another.

Optionally, in use, the chassis comprises an upper surface and a lower surface, wherein the first linear actuator is provided proximal the upper surface and/or the second linear actuator is provided proximal the lower surface.

By providing the first linear actuator proximal the upper surface of the chassis and/or the second linear actuator proximal the lower surface, the linear actuators are free to move without interference with each other. Accordingly a simple arrangement is provided.

In some embodiments, the first linear actuator is coupled to the upper surface of the chassis, e.g. above the upper surface, and/or the second linear actuator is coupled to the lower surface of the chassis, e.g. below the lower surface.

In some embodiments the first and second planes in which the first and second linear actuators move respectively are substantially parallel.

Optionally the first and second linear actuators are coupled to the chassis such that the first and second linear actuators are configured to move in substantially the same plane.

Advantageously such an arrangement reduces the height required to accommodate the first and second linear actuators and hence is space-saving. The term "height" will be understood to mean a distance in a direction substantially perpendicular to the ground when the working machine is in use.

Optionally each of the first and second wheel assemblies comprises a wheel and a steering mechanism arranged to independently control the turning of the wheel with respect to the respective elongate support member.

Advantageously, this arrangement facilitates turning of the working machine since the turn angle can be set appropriately for each wheel independently.

In some embodiments, the steering mechanism comprises a linear actuator which is offset from the axis of rotation of the wheel.

Optionally the steering mechanism is configured to extend away from the respective elongate support member such that the wheel is provided spaced at a distance from the elongate support member, thereby facilitating turning of the wheel.

In this way, the wheel is free to turn without obstruction by the respective elongate support member. Accordingly, greater manoeuvrability of the working machine is provided.

Spacing the wheel from the elongate support member has the advantage of facilitating turning of the wheel through a useful range of angles when in both a stowed and deployed configuration.

In some embodiments, the first and second elongate support members are arranged substantially parallel to each other when in the stowed configuration, for example the elongate support members each comprise a linear portion, wherein the linear portions are arranged substantially parallel to each other in the stowed configuration. In some embodiments the first and second elongate support members are positioned substantially parallel to a longitudinal axis of the working machine when in the stowed position. For example the elongate support members each comprise a linear portion, wherein the linear portions are arranged substantially parallel to a longitudinal axis of the working machine when in the stowed position. In such arrangements, spacing of the wheels from the elongate support members is particularly important in order to ensure that the wheels can turn through the necessary range of angles.

In some embodiments, the longitudinal axis of the working machine is tangential to the direction of movement of the working machine.

Optionally the elongate support members each comprise a cranked portion proximal the chassis such that the elongate support members are cranked towards each other.

In this way, a reduced track width can be provided without compromising on the ability to turn the wheel through the necessary range of angles.

Optionally the elongate support members comprise a linear portion configured to extend in a direction substantially parallel to a longitudinal axis of the working machine when the support members are in the stowed configuration.

Optionally, when the first and second elongate support members are in the stowed configuration and/or the deployed configuration, the position of the first and second elongate support members is symmetrical about a longitudinal axis of the working machine.

Such an arrangement aids uniform stability of the working machine.

Optionally the elongate support members each comprise a stop portion, wherein the respective stop portions are configured to abut each other to limit retraction of the elongate support members beyond a predetermined position.

In this way, retraction of the respective linear actuator is also limited to a predetermined amount. This may facilitate subsequent action of the linear actuators to move the elongate support members from the stowed configuration to the deployed configuration.

Optionally the elongate support members are angled downwards, i.e. towards the ground when in use, as they extend away from the chassis.

In this way, working machine has a greater ground clearance which is advantageous for use on rough terrain.

Optionally the first and second linear actuators are pivotally connected to the respective elongate support member at a respective pivot point.

Optionally the first and second elongate support members each comprise an outward facing side which faces away from the common pivot axis, and an inward facing side which faces towards the common pivot axis, wherein the first and second linear actuators are coupled to the outward facing side of the respective elongate support member.

In this way, the angle between the linear actuator and the respective elongate support member is maximised, thereby facilitating actuation of the respective actuator.

Optionally the first and/or second linear actuators are hydraulic actuators.

Optionally the first and second elongate support members are provided at a front of the machine, and the working machine also comprises:
third and fourth elongate support members provided at the rear of the machine, each of the third and fourth elongate support members being pivotally coupled to the chassis at a respective pivot point; and
a third wheel assembly coupled to the third elongate support member and a fourth wheel assembly coupled to the fourth elongate support member.

Optionally, the working machine comprises a third linear actuator coupled to the third elongate support member and a fourth linear actuator coupled to the fourth elongate support member, wherein the third and fourth elongate support members are movable by operation of the third and fourth linear actuators respectively between the stowed configuration and the deployed configuration, wherein a distance between the third and fourth wheel assemblies is greater in the deployed configuration than in the stowed configuration.

Optionally the third and fourth linear actuators are pivotally coupled to the chassis along a second common pivot axis.

Optionally the working machine comprises a mobile elevated work platform.

Optionally the working machine comprises a work platform coupled to the chassis by an extendable support.

When in use and the work platform is extended away from the chassis, positioning the first and second elongate members in the deployed position provides increased support to the working machine to counterbalance the extended work platform.

### BRIEF DESCRIPTION OF FIGURES

Embodiments will now be described with reference to the accompanying drawings, in which:
Figure 1 shows a schematic perspective view of a working machine as disclosed herein;
Figure 2a shows a perspective view of the working machine of Figure 1 when in a stowed configuration;
Figure 2b shows a perspective view of the working machine of Figure 1 when in a deployed configuration;
Figure 3a shows a plan view of the working machine of Figure 1 when in a stowed configuration;
Figure 3b shows a plan view of the working machine of Figure 1 when in a deployed configuration;
Figure 4a shows a front view of the working machine of Figure 1 when in a stowed configuration;
Figure 4b shows a front view of the working machine of Figure 1 when in a deployed configuration;
Figure 5a shows a plan view of the working machine of Figure 1 when in a stowed configuration and when the machine is turning;
Figure 5b shows a plan view of the working machine of Figure 1 when in a deployed configuration and when the machine is turning;
Figure 6 shows a side view of the working machine of Figure 1 when in a stowed configuration; and
Figure 7 shows a partial view of the working machine of an alternative embodiment disclosed herein.

### DETAILED DESCRIPTION

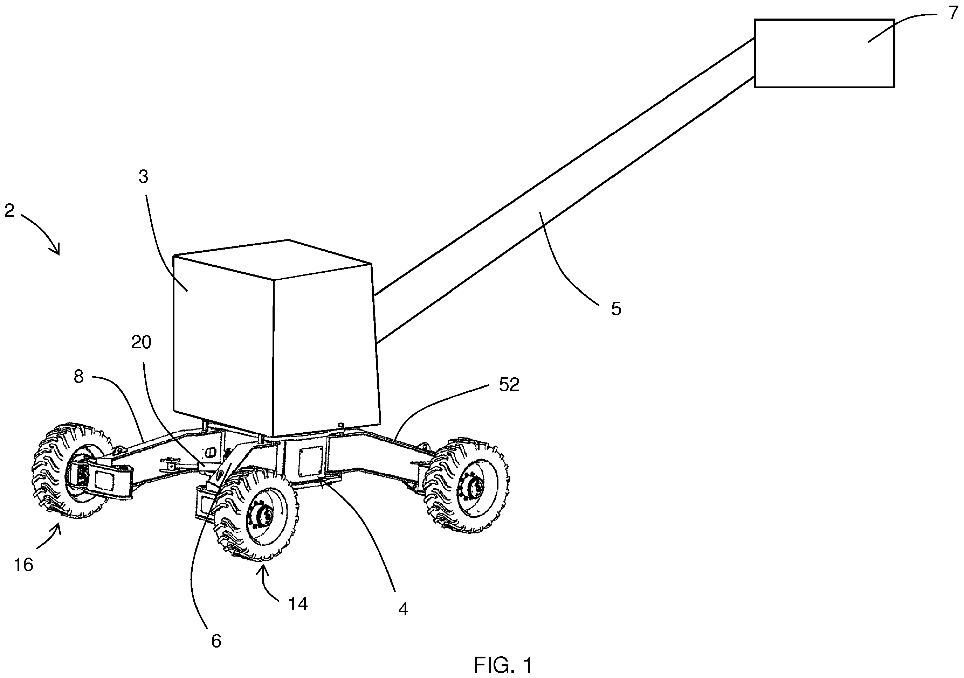

Referring to Figure 1, a working machine is indicated generally at 2. The working machine 2 is a mobile elevated work platform. In alternative embodiments the working machine may be any other type of working machine or vehicle.

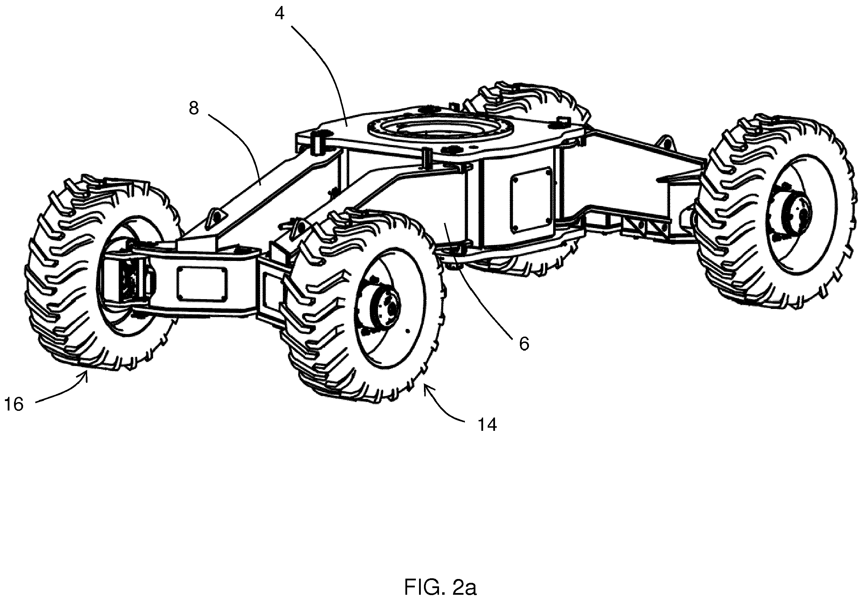

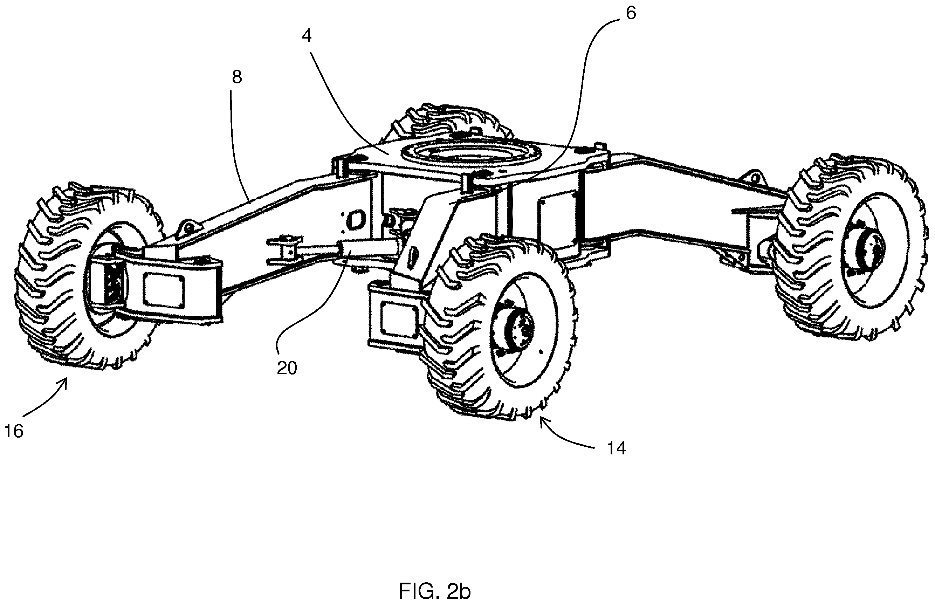

The working machine 2 includes a chassis 4 supported by four elongate support members 6, 8, 50, 52, which will be described in more detail below. The chassis 4 supports a base 3 which is rotatably mounted on the chassis 4, such that the base 3 is arranged for rotation with respect to the chassis 4. A boom 5 extends from a first end, coupled to the rotatable base 3, to a second end, at which a work platform 7 is supported. The base 3, boom 5 and work platform 7 are not shown on any of Figures 2a-7 for simplicity.

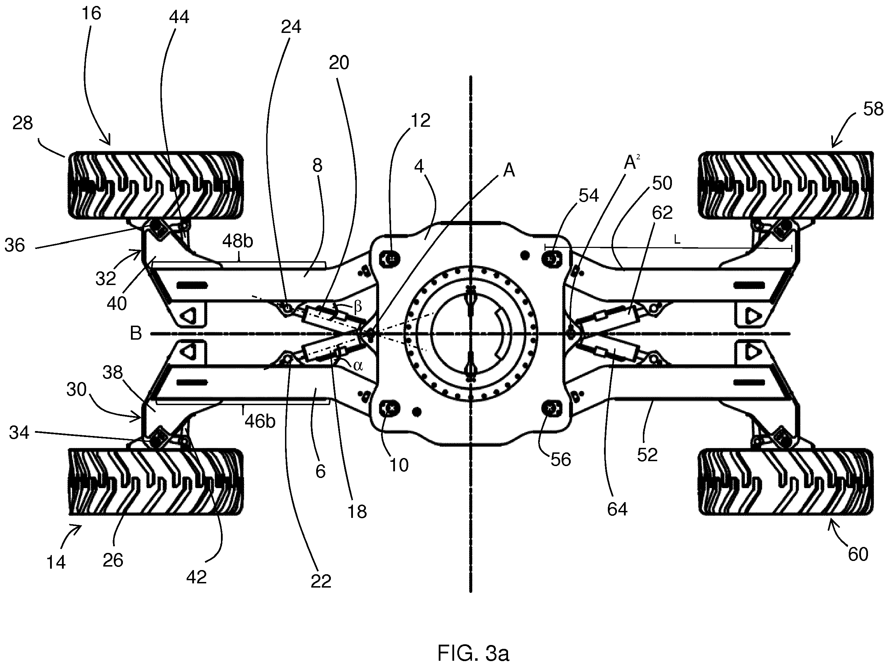

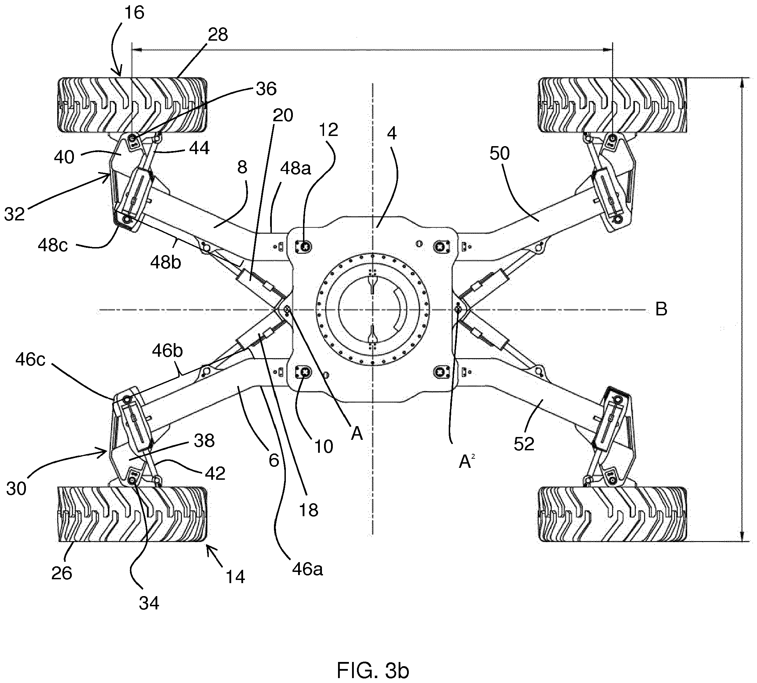

With particular reference Figures 3a and 3b, a first elongate support member 6 and a second elongate support member 8 are coupled to a front of the chassis 4. The first elongate support member 6 is pivotally coupled to the chassis 4 at a first pivot point 10. The second elongate support member 8 is pivotally coupled to the chassis at a second pivot point 12. Accordingly, each of the elongate support members 6, 8 is moveable by rotation about the respective pivot point 10, 12. It will be understood that the first and second elongate support members 6, 8 are movable towards and away from each other by pivoting about the respective pivot point 10, 12.

The first and second elongate support members 6, 8 comprise box sections which are fabricated from metal plate. Alternatively, any suitable construction may be used.

Each elongate support member 6, 8 is coupled to a wheel assembly 14, 16. A first wheel assembly 14 is coupled to the first elongate support member 6 at the free end of the support member 6. Similarly a second wheel assembly 16 is coupled to the second elongate support member 8 at the free end of the support member 8.

A first linear actuator 18 is coupled to the first elongate support member 6 and a second linear actuator 20 is coupled to the second elongate support member 8. The first and second linear actuators 18, 20 are arranged to move the respective elongate support member 6, 8 by operation of the actuators, such that the respective elongate support member 6, 8 rotates about its pivot 10, 12. In particular, the first and second linear actuators 18, 20 are arranged to move the elongate support members between a stowed configuration and a deployed configuration.

Figures 1, 2b, 3b, 4b and 5b illustrate the working machine 2 in the deployed configuration. Figures 2a, 3a, 4a and 5a illustrate the working machine 2 in the stowed configuration. As can be seen by comparison of these Figures, in the deployed configuration, the distance between the first and second wheel assemblies 14, 16 is greater than the distance between the first and second wheel assemblies 14, 16 in the stowed configuration.

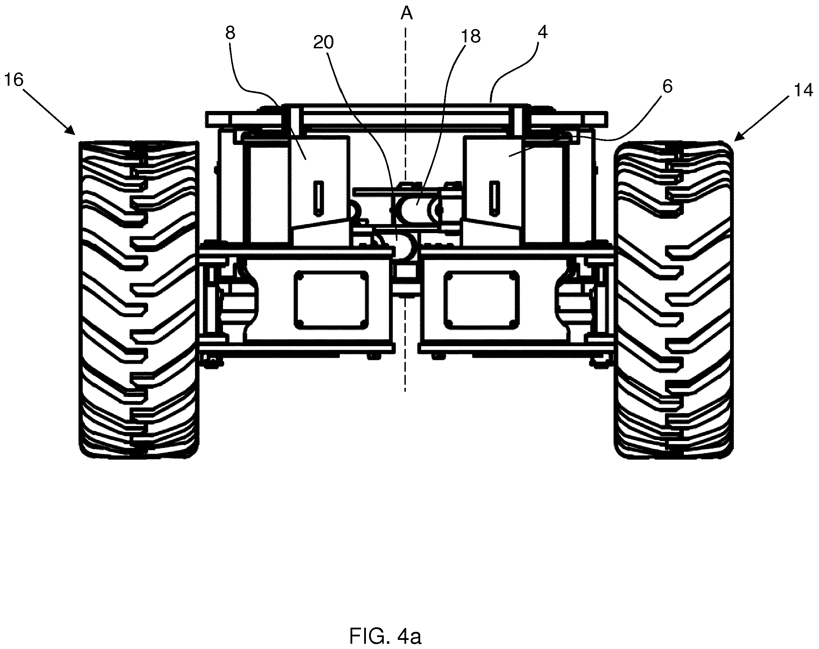

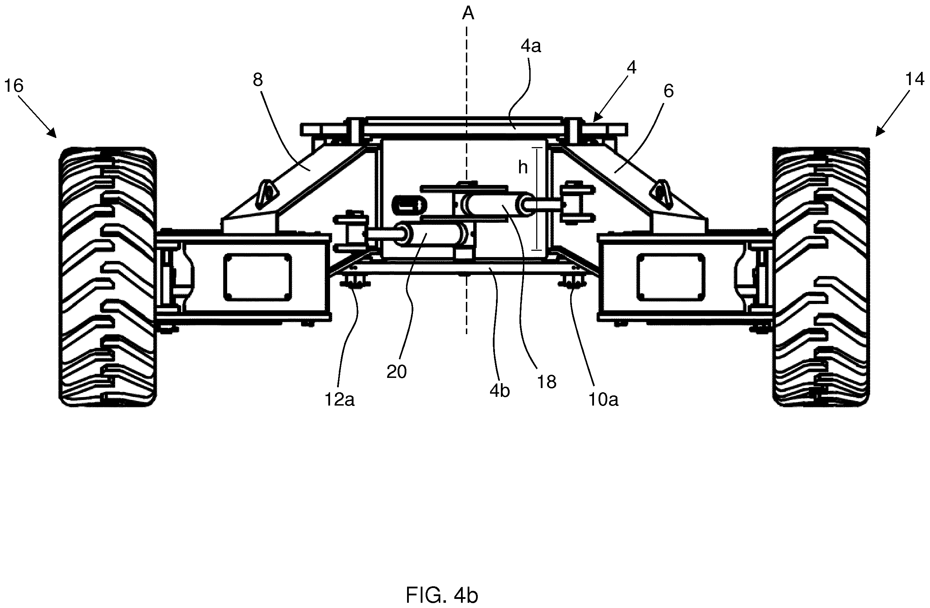

With reference to Figures 3a, 3b, 4a and 4b, the first and second linear actuators 18, 20 are pivotally coupled to the chassis 4 along a common pivot axis A. In the illustrated embodiments, the first and second linear actuators 18, 20 are coupled to the chassis 4 by a single pivot pin extending along the common pivot axis A.

The common pivot axis A is positioned between the first and second pivot points 10, 12. In the illustrated embodiments, the common pivot axis A is located at a position equidistant from the first and second pivot points 10, 12. In other words the first and second linear actuators 18, 20 are both coupled to the chassis 4 at a position equidistant from the respective pivot points 10, 12 at which the first and second elongate support members 6, 8 are coupled to the chassis. With particular reference to Figure 3a, the working machine 2 has a longitudinal axis B. The common pivot axis A is positioned to intersect the longitudinal axis B.

The first linear actuator 18 is coupled to the first elongate support member 6 such that an angle α is formed between the actuator 18 and the elongate member 6. Similarly, member 8 such that an angle β is formed between the actuator 20 and the elongate member 8.

As can be seen from the figures, by positioning the common pivot axis A equidistant from the pivot points 10, 12 at which the first and second elongate support members 6, 8 are coupled to the chassis 4, the angles α, β between the linear actuators 18, 20 and the respective elongate support members 6, 8 are both maximised. Maximising these angles α, β has the advantage that the component of the force applied to the elongate support member 6, 8 by the actuator in the direction perpendicular to the length of the elongate support member is maximised. Therefore the overall force exerted by the linear actuator can be reduced (i.e. the force in the direction along the length of the actuator can be reduced). In other words, where the linear actuator is a hydraulic ram, for example, the amount of extension of the ram is reduced where the angles α, β are maximised. Accordingly, actuation of the respective actuator 18, 20 is facilitated as a result of this arrangement. In this way, movement of the first and second elongate support members 6, 8 between the stowed configuration and deployed configuration and vice versa is facilitated.

The linear actuators 18, 20 are coupled to the respective elongate support member 6, 8 at a respective pivot point 22, 24. As can be seen in Figure 3a, for example, the first linear actuator 18 is coupled to the first elongate support member 6 at pivot point 22. Similarly, the second linear actuator 20 is coupled to the second elongate support member 8 at pivot point 24.

The first and second elongate support members 6, 8 comprise a length extending from a first end, at which the elongate support member 6, 8 is coupled to the chassis 4, and a second end, at which the elongate support member 6, 8 is coupled to the respective wheel assembly 14, 16. This length is shown as "L" in Figure 3a (illustrated in relation to a third elongate support member 50).

The respective linear actuators 18, 20 are coupled to the respective elongate support member 6, 8 at a position falling within a centre third of the length L of the elongate support member 6, 8. Alternatively, the linear actuator may be coupled to the elongate support member at any suitable position along its length. The first and second linear actuators are coupled to the respective elongate support member 6, 8 at the same distance along the length of the elongate support member 6, 8.

The first and second linear actuators 18, 20 are arranged such that they can be operated simultaneously such that the first and second elongate members 6, 8 can be moved in unison. For example, the first and second linear actuators 18, 20 are arranged such that the first and second elongate members 6, 8 can be moved simultaneously and symmetrically about the longitudinal axis B of the working machine 2.

Movement of the first and second elongate support members 6, 8 by action of the respective actuator 18, 20 will result in corresponding reaction forces being applied to the common pivot point A. It will be understood that, for movement of each elongate support member 6, 8, the corresponding reaction force applied to the common pivot point A will comprise a component in a direction opposite to the direction of movement of the respective elongate support member 6, 8.

Since the first and second elongate members 6, 8 are moved symmetrically and simultaneously away from each other from the stowed position to the deployed position, and further since the common pivot point A is equidistant from the first and second pivot points 10, 12, components of the reaction forces in the directions opposite to the direction of movement of the respective support member 6, 8 will substantially cancel each other out. This reduces the reaction forces applied to the common pivot A, hence reduce fatigue related wear of the working machine 2.

In some embodiments, the first and second linear actuators 18, 20 may be arranged such that they can be operated independently of each other. Accordingly the first and second elongate support members 6, 8 can be moved independently of each other. In such arrangements, the first and second elongate support members 6, 8 are disconnected from each other and so can be moved separately from each other.

With reference in particular to Figure 4b, the first and second linear actuators 18, 20 are coupled to the chassis 4 such that they are provided in a stacked arrangement in relation to the common pivot axis A. In other words the first and second linear actuators 18, 20 are arranged one above the other. In this way, the first linear actuator 18 is configured to move in a first plane and the second linear actuator 20 is arranged to move in a second plane, wherein the first and second plane are different from each other and the first and second planes are provided one above the other.

In alternative embodiments, the first and second linear actuators are coupled to the chassis such that they are arranged to move in the same plane. In such embodiments, the eyes of the linear actuators which receive the common pivot pin may be offset from the line of action of the actuators, for example. Alternatively, the eyes of the linear actuators may be interdigitated to permit movement of the linear actuators in the same plane.

In the illustrated embodiment of Figure 4b, the chassis 4 includes an upper surface 4a and a lower surface 4b. When in use, the upper surface is provided above the lower surface. Put another way, the lower surface 4b of the chassis is provided closest to a ground level, and the upper surface 4a of the chassis 4 is provided furthest away from the ground surface. With reference to Figure 4b, the common pivot pin (extending along common pivot axis A) is coupled to the lower surface 4b of the chassis 4. In other embodiments, the common pivot pin may be coupled to the upper surface 4a of the chassis 4, or coupled to another component of the chassis 4.

The upper and lower surfaces 4a, 4b of the chassis 4 are constructed from metal plate. Mounting the pivot pin directly to the metal plate of the upper and/or lower surface 4a, 4b is advantageous in that it provides a relatively strong mounting arrangement. If, for example, the pivot pin was coupled to the chassis 4 via a bracket welded to the chassis 4, there would be a region of relative weakness at the welded joint. Accordingly, mounting the pivot pin directly to the upper and/or lower surface 4a, 4b avoids such a weakness being present.

As can be seen with reference to Figure 4b in particular, the first and second elongate support members 6, 8 have a height, h, in a direction substantially perpendicular to the ground when the machine 2 is in use. At the end of the elongate support member 6, 8 which is coupled to the chassis 4, the height of the elongate support members 6, 8 extends from a location proximal the upper surface 4a to a location proximal the lower surface 4b.

The first elongate support member 6 is pivotally coupled to the chassis 4 via a pivot pin 10a. Similarly, the second elongate support member 8 is pivotally coupled to the chassis 4 via pivot pin 12a. The pivot pins 10a, 12a extend through the respective elongate support member 6, 8 along the full height h of the elongate support member 6, 8. In other words, the pivot pins 10a, 12a extend from proximal the upper surface 4a of the chassis 4 to proximal its lower surface 4b, through the respective elongate support member 6, 8.

As previously described, the first and second elongate support member 6, 8 are coupled to respective first and second wheel assemblies 14, 16. Each of the first and second wheel assemblies 14, 16 include a wheel 26, 28 and a steering mechanism 30, 32 arranged to control turning of the wheel 26, 28 with respect to the respective elongate support member 6, 8. In other words, the steering mechanism 30, 32 is arranged to control the angular orientation of the wheel 26, 28 with respect to the elongate support member 6, 8, thereby facilitating turning of the working machine 2.

The first wheel assembly 14 comprises a wheel 26 controlled by first steering mechanism 30. The second wheel assembly comprises a wheel 28 which is controlled by a second steering mechanism 32. The first and second steering mechanisms 30, 32 are arranged to be operated independently such that an appropriate turn angle can be set for the first wheel 26 independently of the second wheel 28 and vice versa.

The first steering mechanism 30 comprises a support plate 38 coupled to the first elongate support member 6 at its end distal the chassis 4. The first wheel 26 is pivotally coupled to the support plate 38 of the first steering mechanism 30 at pivot point 34. The first steering mechanism also has a steering actuator 42 which extends from the support plate 38 and is coupled to the wheel 26 in order to effect turning of the wheel 26 about its pivot 34.

Similarly the second steering mechanism 32 comprises a support plate 40 coupled to the second elongate support member 8 at its end distal the chassis 4. The second wheel 28 is pivotally coupled to the support plate 40 of the second steering mechanism 32 at pivot point 36. The second steering mechanism 32 includes a steering actuator 44 which extends from the support plate 40 and is coupled to the wheel 28 in order to effect turning of the wheel 28 about its pivot 36.

Actuation of the respective steering actuators 42, 44 results in adjustment of the angle of the wheel 26, 28 with respect to the respective elongate support member 6, 8. The first and second steering actuators 42, 44 are configured to operate independently such that the first and second wheels 26, 28 can be turned independently to an appropriate turning angle. Accordingly, this facilitates turning of the working machine 2. In the illustrated embodiments, the steering actuators 42, 44 are hydraulic rams.

The support plates 38, 40 of the steering mechanisms 30, 32 are coupled to the respective elongate support member 6, 8 such that they project away from the elongate support member 6, 8. In this way, the wheels 26, 28 are provided spaced at a distance from the respective elongate support member 6, 8. In other words, as can be seen from the figures, the support plates 38, 40 of the steering mechanisms 30, 32 extend away from the longitudinal axis B of the working machine 2.

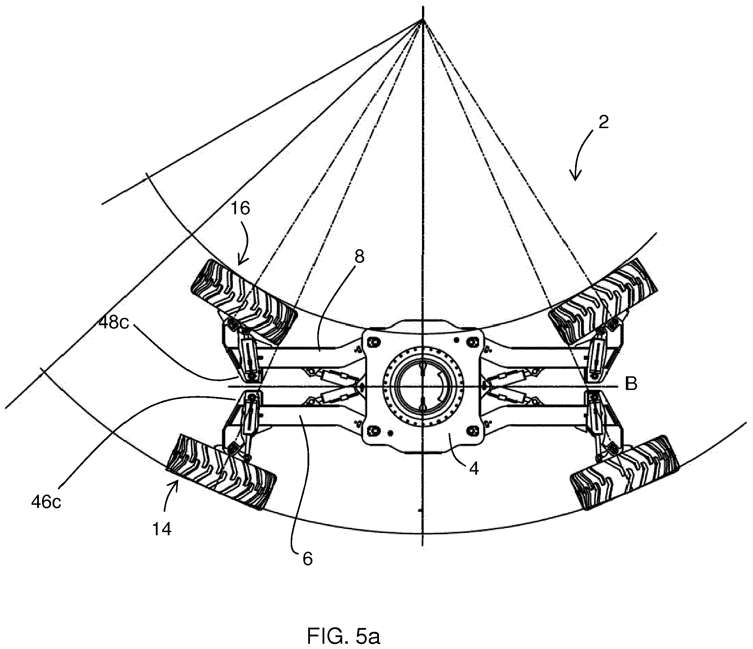

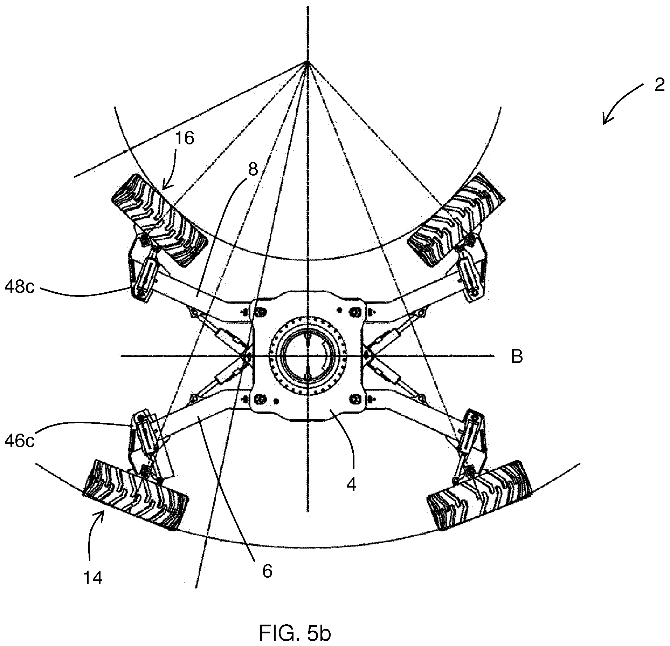

This arrangement facilitates turning of the respective wheel 26, 28 through a useful range of angles when the first and second elongate support members 6, 8 are in the stowed or deployed configurations. This is of particular importance when the elongate support members are in their stowed configuration to ensure that the wheels 26, 28 can be turned as required (see Figures 5a and 5b).

Each of the first and second elongate support members 6, 8 includes a cranked portion 46a, 48a proximal the chassis 4, such that the elongate support members 6, 8 are cranked towards each other. This provides a reduced track width when the working machine 2 is in the stowed configuration, whilst not compromising the turning range of the wheels 14, 16.

The first and second elongate support members 6, 8 further include a linear portion 46b, 48b, extending from the cranked portion 46a, 48a towards the respective wheel assembly 14, 16. When the working machine is in the stowed position, the linear portions 46b, 48b extend substantially parallel to the longitudinal axis B of the working machine 2. The linear portions 46b, 48b are substantially parallel to each other when the working machine 2 is in the stowed configuration.

With reference to Figure 3a, when the first and second elongate support members 6, 8 are in the stowed configuration, the first and second elongate support members 6, 8 extend from the chassis 4 such that the linear portions 46b, 48b extend in a direction substantially parallel to the longitudinal axis B of the working machine 2. In contrast, with reference to Figure 3b, when the first and second elongate support members 6, 8 are in their deployed configuration the first and second elongate support members 6, 8 extend in a direction away from the longitudinal axis B of the working machine 2. In this way, a distance between the first and second wheel assemblies 14, 16 in the deployed configuration is greater than in the stowed configuration. Accordingly the stability of the working machine 2 transverse to the longitudinal axis B is greater in the deployed position than in the stowed position.

Moving the wheels 26, 28 to the deployed position has the advantage that the machine 2 has more uniform stability as the rotating base 3 is rotated about the chassis 4. Increasing the stability of the working machine 2 transverse to the longitudinal axis B is important to stabilise the base 3 as is slewed about the chassis 4.

Turning to Figures 5a and 5b, it will be understood that the longitudinal axis B of the working machine 2 is tangential to the direction of movement of the working machine 2. It can also be seen that the positioning of the first and second elongate support members 6, 8 when in the stowed configuration and when in the deployed configuration is symmetrical about the longitudinal axis B working machine 2. Hence aiding the uniformity of the stability of the working machine.

The elongate support members 6, 8 each further comprise a stop portion 46c, 48c provided distal the chassis 4, in other words proximal the wheel assemblies 14, 16. The respective stop portions 46c, 48c are arranged to abut each other when the elongate support members 6, 8 are retracted by a predetermined distance. This limits the retraction of the elongate support members 6, 8 beyond this predetermined distance and thereby facilitates operation of the actuators 18, 20.

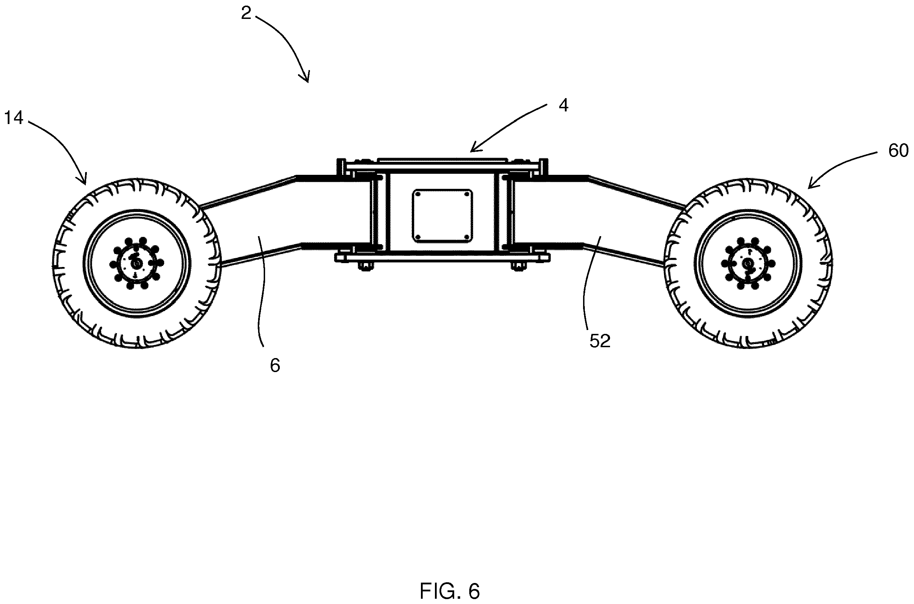

With reference to Figure 6, as the elongate support members 6, 8 extend away from the chassis 4, the elongate support members 6, 8 are angled downwards, in other words are angled towards the ground when in use. In this way, the ground clearance of the working machine 2 is maximised, which is particularly beneficial when in use on rough terrain.

In the illustrated embodiments, the first and second linear actuators 18, 20 are hydraulic rams. The actuators 18, 20 are operated by expansion and retraction of the hydraulic rams 18, 20. It will be understood that any suitable actuator may be used.

In the illustrated embodiments, the first and second elongate members 6, 8 are provided at the front of the working machine 2. In other words, the first and second elongate support members 6, 8 are provided at the front of the machine 2 with respect to the direction of movement of the working machine 2. The working machine 2 also comprises third and fourth elongate support members 50, 52 which are provided at the rear of the machine 2 with respect to its direction of movement.

The third elongate support member 50 is pivotally coupled to the chassis 4 at a pivot point 54. A third wheel assembly 58 is coupled to the third elongate support member 50 at its free end. Similarly, the fourth elongate support member 52 is pivotally coupled to the chassis 4 at a pivot point 56. A fourth wheel assembly 60 is coupled to the fourth elongate support member 52 at its free end.

The working machine 2 also includes a third linear actuator 62 coupled to the third elongate support member 50 and a fourth linear actuator 64 coupled to the fourth elongate support member 52. The third and fourth linear actuators 62, 64 are coupled to the chassis 4 at a second common pivot axis A².

The third and fourth linear actuators 62, 64 are arranged to move the respective elongate support member 50, 52 by operation of the actuators 62, 64, such that the respective elongate support member 50, 52 rotates about its pivot 54, 56. In particular, the third and fourth linear actuators 62, 64 are arranged to move the elongate support members between a stowed configuration and a deployed configuration.

It will be appreciated that the third elongate support member 50, third wheel assembly 58 and third linear actuator 62 are substantially identical to the first elongate support member 6, the first wheel assembly 26 and the first linear actuator 18 respectively. Accordingly, the above description in relation to the first elongate support member 6 and the components coupled thereto also applies to the third elongate support member 50. Similarly the fourth elongate support member 52, fourth wheel assembly 60 and fourth linear actuator 64 are substantially identical to the second elongate support member 8, the second wheel assembly 16 and the second linear actuator 20 respectively. Accordingly, the above description in relation to the second elongate support member 8 and the components coupled thereto also applies to the fourth elongate support member 52.

Figures 1, 2b, 3b, 4b and 5b illustrate the working machine 2 in the deployed configuration. Figures 2a, 3a, 4a and 5a illustrate the working machine 2 in the stowed configuration. As can be seen by comparison of these Figures, in the deployed configuration, the distance between the first and second wheel assemblies 14, 16 is greater than the distance between the first and second wheel assemblies 14, 16 in the stowed configuration. Similarly, in the deployed configuration, the distance between the third and fourth wheel assemblies 58, 60 is greater than the distance between the third and fourth wheel assemblies 58, 60 in the stowed configuration.

Use of the working machine 2 will now be described with respect to the first and second elongate support members 6, 8. It will be appreciated that the following description also applies mutatis mutandis to the third and fourth elongate support members 6, 8.

When in use and when the linear actuators 18, 20 are retracted, the first and second elongate support members 6, 8 are arranged in the stowed configuration as shown in Figure 2a, 3a, 4a and 5a. In this arrangement, the distance between the first and second wheels 26, 28 is relatively small. In this arrangement, the working machine 2 can be driven on a road or loaded onto a truck of a standard width for transportation between locations, for example. The longitudinal axis B of the working machine 2 is tangential to the direction of travel.

In order to change the direction of travel of the working machine 2, each of the wheels 26, 28 is independently turned by a required degree. This is achieved by actuation of the respective steering actuator 42, 44. It will be appreciated, with reference to Figure 5a, that the required turn angle may be different for each of the wheels 26, 28. Since the first and second wheels 26, 28 are spaced apart from the respective elongate support member 6, 8, the respective wheel 26, 28 can be turned to the required degree without obstruction from the elongate support member 6, 8.

If it is required to extend the boom 5 and work platform 7 for use, the working machine 2 may then be configured to provide additional support to the extended work platform 7. To provide this additional support, the elongate support members 6, 8 are moved to their deployed configuration, as illustrated in Figure 3b, for example.

To move the elongate support members 6, 8 from the stowed position to the deployed position, the first and second linear actuators 18, 20 are extended. This causes the respective elongate support member 6, 8 to rotate about the respective pivot point 10, 12 at which it is coupled to the chassis 4. In this way, the first and second elongate support members 6, 8 are moved away from each other, such that the distance between the first and second wheels 26, 28 is increased. Similarly, the third and fourth elongate support members 50, 52 are moved to the deployed position. This arrangement provides a counter balance to the extended work platform 7.

As in the stowed configuration, the working machine 2 can be driven in the deployed configuration, the longitudinal axis B of the working machine 2 being tangential to the direction of travel. The first and second steering mechanisms 30, 32 are operated to turn the respective wheel as required. As described above, each wheel 26, 28 is turned by actuation of the respective steering actuator 42, 44 (see Figure 5b). Each of the respective wheels 26, 28 is turned to an appropriate degree by actuation of the respective steering actuator 42, 44. As the steering actuator 42, 44 is extended or retracted, the wheel 26, 28 is pivoted about the pivot point 34, 36 which couples the wheel 26, 28 to the support plate 38, 40. In this way the wheel 26, 28 is turned to the desired degree.

The working machine 2 is arranged such that the first and second elongate support members 6, 8 can be moved simultaneously and symmetrically about the longitudinal axis B of the working machine 2. Additionally or alternatively, movement of each elongate support member 6, 8, can be independent so that one or more of the elongate support members 6, 8, can be moved into its deployed position as desired for the particular scenario.

To return the first and second elongate support members 6, 8 to the stowed configuration, the first and second actuators 18, 20 are retracted. This causes the first and second elongate support members 6, 8 to be moved back towards each other to occupy the stowed configuration. Should the first and second linear actuators 18, 20 continue to retract the elongate support members 6, 8, the stop portions 46c, 48c will be brought into contact with each other. Abutment of the stop portions 46c, 48c prevents further retraction of the first and second elongate members 6, 8. Accordingly, this limits retraction of the first and second elongate support members 6, 8 beyond a predetermined distance. This facilitates operation of the first and second linear actuators 18, 20 to move the elongate support members 6, 8 back to the deployed configuration.

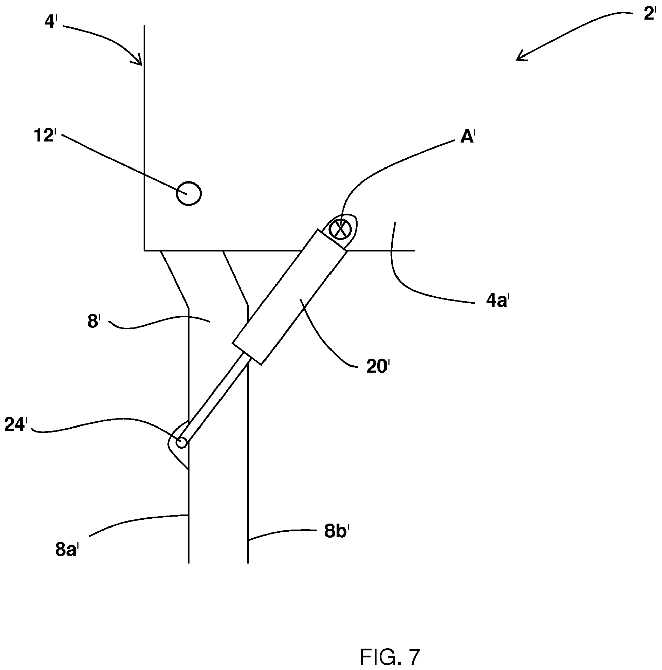

Figure 7 shows a second embodiment of the working machine 2' disclosed herein. Features already described in relation to the first embodiment will be labelled with the same reference numeral primed. For example, the chassis is labelled as 4 in relation to the first embodiment and 4' in relation to the second embodiment. The working machine 2' of second embodiment is the same as that described in relation to the first embodiment with the following exceptions.

The first elongate support member (not shown in Figure 7) includes an outward facing side, which faces away from the common pivot axis A'. In other words, the outward facing side faces away from the second elongate support member 8'. The first elongate support member also includes an inward facing side which faces towards the common pivot axis A'. In other words the inward facing side faces towards the second elongate member 8'. The first linear actuator is coupled to the outward facing side of the first elongate support member at the first pivot point.

Similarly the second elongate support member 8' includes an outward facing side 8a' which faces away from the common pivot axis A'. In other words the outward facing side 8a' faces away from the first elongate support member. The second elongate support member 8' also includes an inward facing side 8b' which faces towards the common pivot axis A'. In other words the inward facing side 8b' faces towards the first elongate support member. The second linear actuator 20' is coupled to the outward facing side 8a' of the second elongate support member 8' at the second pivot point 24'.

Positioning the actuators such that they are coupled to the respective elongate support member at its outward facing side enables the angle between the linear actuators 20' and the elongate support members 8' to be maximised, hence facilitating actuation of the linear actuators 20'.

In addition, in the embodiment of Figure 7, the first linear actuator is coupled to the lower surface (not shown in Figure 7) of the chassis 4' and the second linear actuator 20' is coupled to the upper surface 4a'. In this way, the first linear actuator moves in a plane below the chassis 4' and the second linear actuator 20' moves in a plane above the chassis 4'. Hence movement of the first linear actuator does not interfere with the movement of the second linear actuator 20' and vice versa.

Although the invention has been described above with reference to one or more embodiments it will be appreciated that various changes or modifications may be made without departing from the scope of the invention as defined in the appended claims. For example, whilst the embodiment above has been described in the context of a mobile elevated work platform it will be understood that the working machine may be any suitable type of machine or vehicle.

## Claims

1. A working machine comprising:
a chassis;
first and second elongate support members, each elongate support member being pivotally coupled to the chassis at a respective pivot point;
a first wheel assembly coupled to the first elongate support member and a second wheel assembly coupled to the second elongate support member;
a first linear actuator coupled to the first elongate support member and a second linear actuator coupled to the second elongate support member, wherein the elongate support members are movable by operation of the actuators between a stowed configuration and a deployed configuration, wherein a distance between the first and second wheel assemblies is greater in the deployed configuration than in the stowed configuration,
and wherein the first and second linear actuators are pivotally coupled to the chassis along a common pivot axis.

2. A working machine according to claim 1, wherein the common pivot axis is located at a position between the respective pivot points at which the first and second elongate support members are coupled to the chassis, for example at a position equidistant from the respective pivot points at which the first and second elongate support members are coupled to the chassis, and/or wherein the working machine comprises a longitudinal axis and the common pivot axis intersects the longitudinal axis.

3. A working machine according to any preceding claim, wherein the first and second elongate support members comprise a length and the linear actuators are coupled to the respective elongate support member at a position falling within a centre third of the length.

4. A working machine according to any preceding claim, wherein the first and second linear actuators are arranged for simultaneous movement, for example, simultaneous movement which is symmetric about a longitudinal axis of the working machine.

5. A working machine according to any preceding claim, wherein the first and second linear actuators are configured to independently move the respective first and second elongate members.

6. A working machine according to any preceding claim, wherein the first and second linear actuators are connected to the chassis by a common pivot pin provided along the common pivot axis.

7. A working machine according to any preceding claim, wherein the elongate support members have a height in a direction substantially perpendicular to the ground when the working machine is in use, and wherein the elongate support members are pivotally coupled to the chassis by a respective pivot pin which extends along the height of the respective elongate support member, optionally wherein the chassis comprises an upper surface and a lower surface, and wherein the height of the elongate support members extends from a location proximal the upper surface to a location proximal the lower surface.

8. A working machine according to any preceding claim, wherein the first and second linear actuators are provided in a stacked arrangement such that the first linear actuator is configured to move in a first plane and the second linear actuator is configured to move in a second plane different from the first plane, wherein, when in use, the first and second planes are provided one above the other, optionally wherein, in use the chassis comprises an upper surface and a lower surface, wherein the first linear actuator is provided proximal the upper surface and/or the second linear actuator is provided proximal the lower surface.

9. A working machine according to any preceding claim, wherein each of the first and second wheel assemblies comprises a wheel and a steering mechanism arranged to independently control the turning of the wheel with respect to the respective elongate support member, optionally wherein the steering mechanism is configured to extend away from the respective elongate support member such that the wheel is provided spaced at a distance from the elongate support member, thereby facilitating turning of the wheel, optionally wherein the elongate support members each comprise a cranked portion proximal the chassis such that the elongate support members are cranked towards each other.

10. A working machine according to any preceding claim, wherein the elongate support members comprise a linear portion configured to extend in a direction substantially parallel to a longitudinal axis of the working machine when the support members are in the stowed configuration.

11. A working machine according to any preceding claim wherein, when the first and second elongate support members are in the stowed configuration and/or the deployed configuration, the position of the first and second elongate support members is symmetrical about a longitudinal axis of the working machine.

12. A working machine according to any preceding claim, wherein the elongate support members each comprise a stop portion, wherein the respective stop portions are configured to abut each other to limit retraction of the elongate support members beyond a predetermined position.

13. A working machine according to any preceding claim, wherein the elongate support members are angled downwards, i.e. towards the ground when in use, as they extend away from the chassis.

14. A working machine according to any preceding claim, wherein the first and second elongate support members are provided at a front of the machine, and wherein the working machine also comprises:
third and fourth elongate support members provided at the rear of the machine, each of the third and fourth elongate support members being pivotally coupled to the chassis at a respective pivot point; and
a third wheel assembly coupled to the third elongate support member and a fourth wheel assembly coupled to the fourth elongate support member,
optionally comprising a third linear actuator coupled to the third elongate support member and a fourth linear actuator coupled to the fourth elongate support member, wherein the third and fourth elongate support members are movable by operation of the third and fourth linear actuators respectively between the stowed configuration and the deployed configuration, wherein a distance between the third and fourth wheel assemblies is greater in the deployed configuration than in the stowed configuration,
optionally wherein the third and fourth linear actuators are pivotally coupled to the chassis along a second common pivot axis.

15. A working machine according to any preceding claim, wherein the working machine comprises a mobile elevated work platform, optionally comprising a work platform coupled to the chassis by an extendable support.
